# EUROPEAN PATENT SPECIFICATION

(11) **EP 3 207 807 B1**
(45) Date of publication and mention of the grant of the patent: **08.01.2020**
(21) Application number: 15850071.0
(22) Date of filing: 08.07.2015
(51) Int. Cl.: A23L 2/38, A23L 29/10, A23L 29/212, A23L 29/231, A23L 29/238, A23L 29/25, A23L 29/256, A23L 29/262, A23L 33/10, A23L 33/105, A23L 2/52

(54) **GINSENG POWDER-CONTAINING BEVERAGE COMPOSITION AND METHOD FOR PREPARING SAME**
GINSENGPULVERHALTIGE GETRÄNKEZUSAMMENSETZUNG SOWIE VERFAHREN ZUR HERSTELLUNG DAVON
COMPOSITION POUR BOISSON CONTENANT DE LA POUDRE DE GINSENG ET PROCÉDÉ DE PRÉPARATION ASSOCIÉ

(30) Priority: 17.10.2014 KR 20140140727
(43) Date of publication of application: 23.08.2017
(73) Proprietor: CJ Cheiljedang Corporation, Seoul 100-400 (KR)
(72) Inventor: SEO, Yong Ki, Seoul 152-706 (KR); SONG, Ji Hye, Incheon 403-866 (KR); PAEK, Se Hee, Seoul 151-841 (KR)
(74) Representative: Cabinet Beau de Loménie
(86) International application number: PCT/KR2015/007070
(87) International publication number: WO 2016/060362

(56) References cited:
- JP-A- H06 169 737
- JP-A- 2013 169 153
- KR-A- 20050 076 582
- KR-A- 20060 086 118
- KR-A- 20070 106 304
- KR-A- 20130 097 157
- US-A- 5 700 513
- US-A1- 2005 170 021
- US-A1- 2009 061 064

## Description

### [Technical Field]

The present invention relates to a ginseng powder-containing beverage composition and a method for preparing the same.

### [Background Art]

Recently, consumer interest in health foods has increased, and various health beverages and health foods using plant raw materials such as ginseng have been developed and commercialized.

Particularly, most methods for preparing health beverages with ginseng use ginseng extracts. However, such methods have a disadvantage in that the effective ingredients contained in the extract are significantly reduced as compared with the raw materials and thus consumers cannot take the whole ingredients of the raw materials.

In contrast, ginseng powder-containing beverages have an advantage in that all ingredients contained in ginseng are edible.

However, in preparation of powdered beverages, it is important to maintain a stable state for a long time by preventing precipitation of ginseng powder as an insoluble solid component and layer separation due to separation of a liquid phase.

As disclosed in Korean Patent No. 10-0658772, products capable of securing beverage stability via super micro-pulverization of ginseng while allowing consumers to take whole ingredients have been developed.

US2005/170021 discloses a composition comprising 2.613% of ginseng powder, 0.1% of sugar ester and 0.2% of "*Homogen CJ-1*", said "*Homogen CJ-1*" is composed of 1∼20% of carrageenan, 0.5∼20% of CMC-Na, 5∼60% of microcrystalline cellulose, 0.5∼10% of xanthan gum, 2∼30% of sugar ester of fatty acids, 0.5∼30% of dextrin, 0,5∼10% of excipient and 0.05∼0.5% of an edible oil.

KR20070106304 discloses a composition comprising ginseng, carrageenan and lecithin. This document teaches that the concentration of carrageenan in which no layer separation is formed is 5.0% by weight or more.

However, the use of synthetic additives, such as synthetic stabilizers to prevent precipitation of ginseng powder, synthetic emulsifiers to secure emulsion stability of oil, and fat components to promote flavor, has increased consumer concern regarding these components.

As seen from consumer response regarding recent issues of casein sodium and phosphate in coffee products, negative consumer sentiment regarding synthetic additives is expected to continue.

However, natural stabilizers and natural emulsifiers have poor emulsifying ability and dispersion stability as compared to synthetic stabilizers and synthetic emulsifiers, which makes their applications in beverage commercialization difficult.

Therefore, there is a need for a new method for preparing ginseng powder-containing beverage using natural stabilizers and natural emulsifiers capable of replacing synthetic stabilizers and synthetic emulsifiers used in ginseng powder-containing beverages in the art.

### [Disclosure]

### [Technical Problem]

It is one object of the present invention to provide a ginseng powder-containing beverage composition, which prevents precipitation and layer separation of ginseng powder using a natural stabilizer and a natural emulsifier.

Specifically, the present invention provides a beverage composition, which exhibits dispersion and stability similar to a synthetic stabilizer and a synthetic emulsifier even with a natural stabilizer and a natural emulsifier, and prevents precipitation and layer separation of ginseng powder.

It is another object of the present invention to provide a method for preparing a ginseng powder-containing beverage composition that prevents precipitation and layer separation of ginseng powder.

### [Technical Solution]

One embodiment of the present invention provides a ginseng powder-containing beverage composition including: 0.5% (w/v) to 5% (w/v) of ginseng powder; 0.2% (w/v) to 3% (w/v) of a natural stabilizer containing crystalline cellulose and carrageenan; and 0.01% (w/v) to 3% (w/v) of a natural emulsifier containing lecithin, based on the total volume of the beverage composition;
wherein crystalline cellulose is present in an amount of 0.1% (w/v) to 2% (w/v),
wherein carrageenan is present in an amount of 0.1% (w/v) to 1% (w/v),
wherein the natural stabilizer is free from synthetic stabilizer selected from the group consisting of CMC-Na (carboxymethyl cellulose sodium), methyl cellulose, ester gum, modified starch, carboxymethyl cellulose calcium, potassium alginate, and calcium alginate, and
wherein the natural emulsifier is free from synthetic emulsifier selected from the group consisting of glycerin fatty acid ester, sorbitan fatty acid ester, glycol fatty acid ester, and sugar ester.

Another embodiment of the present invention provides a method for preparing a ginseng powder-containing beverage composition according to the invention, comprising, comprising:
dissolving a natural stabilizer containing crystalline cellulose and carrageenan and a natural emulsifier containing lecithin to prepare a solution,
preparing a dispersion by dispersing ginseng powder in the solution in which the natural stabilizer and the natural emulsifier are dissolved, and
subjecting the dispersion to pressurized homogenization to prepare a ginseng powder-containing beverage composition.

### [Advantageous Effects]

The present invention can provide a beverage composition that allows consumers to take whole functional ingredients of ginseng and has excellent storage stability and ingestion convenience through prevention of layer separation.

Specifically, the beverage composition according to the present invention not only prevents precipitation and layer separation of ginseng powder like those prepared using a synthetic stabilizer and a synthetic emulsifier, but also replaces the synthetic stabilizer and the synthetic emulsifier with a natural stabilizer and a natural emulsifier, thereby relieving consumer anxiety about synthetic additives.

Furthermore, the beverage composition according to the present invention can be applied to liquid products containing various insoluble ingredients, thereby enabling a great contribution to improvement in quality of beverage products containing non-synthetic additives.

### [Description of Drawings]

Fig. 1 is a schematic view of a method for preparing a ginseng powder-containing beverage according to one embodiment of the present invention.
Fig. 2 shows photographs observed after leaving ginseng beverage compositions of Example 1 (Fig. 2b) and Comparative Example 1 (Fig. 2a) at room temperature for four weeks.
Fig. 3 shows photographs observed after leaving ginseng beverage compositions of Example 2 (Fig. 3b) and Comparative Example 2 (Fig. 3a) at room temperature for four weeks.

### [Best Mode]

Hereinafter, embodiments of the present invention will be described in more detail. Descriptions of details apparent to those skilled in the art having ordinary knowledge in this technical field or relevant field will be omitted herein.

According to one embodiment, the present invention provides a ginseng powder-containing beverage composition including: ginseng powder; a natural stabilizer containing crystalline cellulose and carrageenan; and a natural emulsifier containing lecithin.

Hereinafter, each component will be described in detail. Unless otherwise stated, the amount of each component is expressed in weight (g) per 100 ml of the beverage composition.

### Ginseng powder

Examples of ginseng used in the embodiment may include *Panax ginseng* C. A. Meyer, *Panax quinquefolium, P. notoginseng, P. japonicum, P. trifolium, P. pseudoginseng* and *P. vietnamensis,* without being limited thereto.

For example, ginseng used in the embodiment of the present invention is *Panax ginseng* C.A. Meyer.

As used herein, the term "ginseng" refers to all ginseng produced via appropriate food processing treatment of fresh ginseng or cultivated ginseng as raw materials, for example, fresh ginseng, wild ginseng, cultivated ginseng, wood cultivated ginseng, TAEGUK ginseng, dextrinized ginseng (puffing ginseng), red ginseng, black ginseng, enzyme treated red ginseng, fermented ginseng, and the like.

Herein, fresh ginseng means raw ginseng with its original shape and red ginseng means ginseng prepared by steaming and drying raw ginseng, which has a light yellowish brown to reddish brown due to browning reaction. Black ginseng means black colored ginseng prepared by steaming and drying red ginseng several times until the red ginseng turns black. Wild ginseng refers to ginseng which naturally grows; and cultivated ginseng refers to wild ginseng which is planted and grown. Wood cultivated ginseng refers to ginseng artificially grown by sowing seeds or planting ginseng seedlings and growing the same under the forests of mountains.

Specifically, ginseng used in this embodiment is at least one selected from the group consisting of red ginseng, fresh ginseng, wild ginseng, cultivated ginseng and wood cultivated ginseng.

In this embodiment, ginseng powder is present in an amount of 0.5% (w/v) to 5% (w/v), specifically 1% (w/v) to 5% (w/v), for example, 1.5% (w/v) to 4.5% (w/v), more specifically, 2% (w/v) to 4% (w/v).

Within this range of the ginseng powder, the beverage can prevent deterioration in physical properties due to increased viscosity, secure the effects of corresponding ginseng, and prevent deterioration in flavor and texture of food at the same time.

In addition, in order to realize optimum texture of food while minimizing precipitation in liquid phase, the ginseng powder according to the embodiment is pulverized into an appropriate particle size, for example, an average particle size of 1 µm to 100 µm, specifically, an average particle size of 1 µm to 50 µm.

Within this size range of the ginseng powder, it is possible to solve problems such as difficulty in commercialization due to excessive rise in processing costs and to prevent deterioration in in texture of food and dispersion stability.

Ginseng powder-containing beverages may experience powder precipitation and layer separation, which are affected by particle size, particle form and particle distribution of the ginseng powder, components and component ratio of raw materials, components and component ratio of layer separation inhibitors, pH of products, preparation processes, and the like.

Regulation of the particle size of the powder may further require a process for selecting particles having an appropriate particle size or a process for pulverizing powder using separate equipment, thereby deteriorating production efficiency of beverage compositions in large scale.

However, the present invention has an advantage in that precipitation and layer separation of the ginseng powder can be more effectively prevented through specific combination a natural stabilizer and a natural emulsifier and regulation of the contents thereof.

### Natural stabilizer

As used herein, the term "stabilizer" means food raw materials used to improve dispersion stability of beverages, and the term "natural stabilizer" means stabilizers obtained naturally without any synthetic process.

In this embodiment, the natural stabilizer contains crystalline cellulose and carrageenan.

The natural stabilizer essentially containing crystalline cellulose and carrageenan can exhibit dispersion stability similar to that of a synthetic stabilizer.

In addition, the natural stabilizer according to this embodiment may further contain at least one selected from the group consisting of pectin, locust bean gum, gum arabic, alginic acid, gellan gum, karaya gum, tara gum, tamarind gum, xanthan gum, guar gum, starch, and mixtures thereof.

Namely, the natural stabilizer containing crystalline cellulose and carrageenan can secure stability in liquid phase of food powder without using a typical synthetic stabilizer, such as CMC-Na (carboxymethyl cellulose sodium), methylcellulose, ester gum, modified starch, carboxymethyl cellulose calcium, potassium alginate, calcium alginate, and the like.

In this embodiment, the natural stabilizer is present in an amount of 0 .2 % (w/v) to 3% (w/v), specifically, 0.2 % (w/v) to 2% (w/v), for example, 0.2 % (w/v) to 1% (w/v).

In this embodiment, crystalline cellulose is present in an amount of 0.1% (w/v) to 2% (w/v), for example, 0.1% (w/v) to 1% (w/v), 0.1% (w/v) to 0.5% (w/v).

Carrageenan is present in an amount of 0.1% (w/v) to 1% (w/v), for example, 0.1% (w/v) to 0.5% (w/v).

Within this range, the natural stabilizer can prevent excessive increase in viscosity, can decrease production costs, and can improve precipitation and dispersion stability in the beverage composition.

According to the invention, the natural stabilizer is free from synthetic stabilizer selected from the group consisting of CMC-Na (carboxymethyl cellulose sodium), methyl cellulose, ester gum, modified starch, carboxymethyl cellulose calcium, potassium alginate, and calcium alginate.

### Vegetable fat and oil

In this embodiment, the beverage composition may include vegetable fat and oil (refined and processed fat and oil) in order to improve flavor of beverage.

The vegetable fat and oil used in the beverage composition according to this embodiment is not particularly limited. For example, in accordance with the Korean Food Standards Codex, the vegetable fat and oil (refined and processed fat and oil) may be obtained by adding saccharides and may be present in a powder phase having a moisture content of 8% or less.

Specifically, the vegetable fat and oil used in this embodiment is present in an amount of 0.1% (w/v) to 5% (w/v), more specifically 0.1% (w/v) to 4% (w/v), for example, 1% (w/v) to 3% (w/v).

Within this range, the vegetable fat and oil can reduce unique odor of the ginseng powder and provide a mellow flavor.

However, since the vegetable fat and oil is not mixed with water and thus has low emulsification ability, causing generation of a cream layer, that is, a phenomenon wherein fat and oil components are separated from water such that a white fat and oil layer is floated on water, an emulsifier is required.

### Natural emulsifier

As used herein, the term "emulsifier" means a food raw material capable of emulsifying fat and oil components in an aqueous solution, and the term "natural emulsifier" means an emulsifier derived from a natural raw material and not passed through a synthetic process.

In this embodiment, the natural emulsifier includes lecithin.

Further, the natural emulsifier according to this embodiment can secure emulsion stability by stably emulsifying the vegetable fat and oil components through combination of the natural stabilizer containing crystalline cellulose and carrageenan and the natural emulsifier containing lecithin without using typical synthetic emulsifiers, for example, glycerin fatty acid esters such as monoglyceride, organic acid monoglyceride, and polyglyceride; sorbitan fatty acid ester; glycol fatty acid esters such as propylene glycol fatty acid ester and polyethylene glycol fatty acid ester; sugar ester, and the like.

The natural emulsifier is present in an amount of 0.01% (w/v) to 3% (w/v), specifically, 0.01% (w/v) to 2% (w/v), for example, 0.01% (w/v) to 1% (w/v).

Specifically, lecithin is present in an amount of 0.01% (w/v) to 2% (w/v), for example, 0.01% (w/v) to 1% (w/v), more specifically, 0.01% (w/v) to 0.05% (w/v).

Within this range, the natural emulsifier can prevent generation of off-flavor, ensure sufficient emulsifying ability, and prevent formation of a cream layer.

According to the invention, the natural emulsifier is free from synthetic emulsifier selected from the group consisting of glycerin fatty acid ester, sorbitan fatty acid ester, glycol fatty acid ester, and sugar ester.

### Other sweetener

In addition to the above components, the beverage composition further includes sweeteners, as needed. Examples of sweeteners may include various sweeteners known in the art, for example, sucrose, glucose, fructose, taffy, sugar syrups, oligosaccharides, honey, sugar alcohols, palatinose or agave syrups, and the like.

Specifically, the sweetener includes at least one selected from among sucrose, glucose, fructose, sugar syrups, oligosaccharides, honey, and agave syrups.

The sweetener is present in an amount of 1% (w/v) to 20% (w/v), specifically, 5% (w/v) to 15% (w/v), for example, 7% (w/v) to 12% (w/v).

In addition, the beverage composition may further include solvents, as needed. In one embodiment, the solvent is purified water.

Another embodiment of the present invention provides a method for preparing a beverage composition containing powder for foods according to the invention, including: dissolving a natural stabilizer and a natural emulsifier to form a solution, dispersing ginseng powder in the solution in which the natural stabilizer and the natural emulsifier are dissolved to prepare a dispersion, followed by subjecting the dispersion to pressurized homogenization.

This preparation method is substantially the same as the preparation method according to the above embodiment and thus repeated descriptions will be omitted and the following description will be mainly given of different features.

Hereinafter, each process will be described in more detail.

### Dissolving natural stabilizer and natural emulsifier

The natural stabilizer and the natural emulsifier are substantially the same as those of the beverage composition according to the above embodiment, and thus a process for dissolving each component will be mainly described.

In this embodiment, the natural stabilizer and the natural emulsifier may be added to solvents and dissolved therein, or alternatively, the natural stabilizer and the natural emulsifier may be separately dissolved in the corresponding solvents and then mixed with each other.

Specifically, the natural stabilizer may contain crystalline cellulose and carrageenan, and the natural emulsifier may contain lecithin.

For example, the natural stabilizer and the natural emulsifier are added to solvents and then sufficiently dissolved at 50°C to 100°C, for example, 80°C.

Specifically, although the solvents used in this embodiment are not particularly limited, for example, purified water may be used.

### Dispersing ginseng powder

Ginseng powder is dispersed in a mixed solution by adding 0.5% (w/v) to 5% (w/v) of the ginseng powder to the mixed solution, in which the natural stabilizer and the natural emulsifier are dissolved, based on the total volume of the ginseng powder-containing beverage composition.

In this embodiment, after the ginseng powder is dispersed, the resultant dispersion may be filtered through a 10 to 150-mesh filter to inhibit incorporation of foreign substances.

### Pressurized homogenization

Homogenization may be performed by various methods known in the art using, for example, a propeller mixer, a DISPER, a homo mixer, a homogenizer, a colloidal dispenser, or an ultrasonic emulsifying machine, specifically a homogenizer.

In this embodiment, in order to enhance emulsion stability, homogenization may be performed twice or more at a homogenization pressure of 50 bar to 300 bar.

Within this range, it is possible to prevent deterioration in emulsion stability and the beverage composition can be effectively homogenized in terms of facility expense.

Thereafter, sterilization of the beverage composition may be regulated depending on pH of the beverage composition.

### Sterilization

After the pressurized homogenization, sterilization may be performed at 130°C to 140°C when the beverage composition has a neutral pH and at 95°C to 110°C when the beverage composition has an acidic pH.

As used herein, the term "neutral" means a pH of 4.5 to 8.0. If the beverage composition has a neutral pH and sterilization is performed within the above temperature range, it is possible to completely sterilize heat resistant bacteria spores while preventing the beverage composition from deterioration in functional flavors.

As used herein, the term "acidic" means a pH of 4.5 or less. If the beverage composition has an acidic pH and sterilization is performed within the above temperature range, it is possible to sterilize fungus and prevent the beverage composition from deterioration in flavor.

Sterilization under each condition may be performed for 30 seconds to 120 seconds.

Within the temperature and time period, sterilization can be performed without altering flavors, and no change in color is found.

After sterilization, a bottle may be filled with the sterilized beverage composition. Here, the bottle may be filled with the sterilized beverage composition after cooling to a temperature of 85°C to 100°C, and after filling the bottle, post-sterilization may further be performed.

In this embodiment, post-sterilization may be performed at 80°C to 97°C.

Now, the present invention will be described in more detail with reference to examples, comparative examples and experimental examples. It should be understood that these examples, comparative examples and experimental examples are provided for illustration only and should not to be construed in any way as limiting the present invention.

### Examples and Comparative Examples

### [Examples 1 and 2] Preparation of ginseng powder-containing beverage composition prepared using natural stabilizer and natural emulsifier

Beverage compositions of Examples 1 and 2 were prepared using components as listed in Table 1. The amounts of components are expressed in percent of weight (g) based on 100 ml of the beverage composition.

**TABLE 1**

| Raw materials (%, w/v) | | Example 1 | Example 2 |
|---|---|---|---|
| Powder | | Ginseng powder | Red ginseng powder |
| | | 2.613 | 2.613 |
| Stabilizer | Crystalline cellulose | 0.2 | 0.2 |
| | Carrageenan | 0.3 | 0.3 |
| | CMC-Na | - | - |
| | Xanthan gum | - | - |
| Emulsifier | Sucrose fatty acid ester | - | - |
| | Monoglyceride | - | - |
| | Lecithin | 0.1 | 0.1 |
| Vegetable fat and oil | | 2.0 | 2.0 |
| Fructose in liquid phase | | 8.1 | 8.1 |
| Purified water | | q.s. | q.s. |
| Total Sum | | 100 | 100 |

### Example 1 - Preparation of ginseng powder-containing beverage composition

### 1. Dissolution of natural stabilizer and natural emulsifier

Crystalline cellulose and carrageenan as a natural stabilizer and lecithin as a natural emulsifier were completely dispersed in purified water at 80°C while stirring for 10 minutes, followed by adding vegetable fat and oil, and then dispersed while stirring for 10 minutes.

### 2. Disperse of ginseng powder

After the natural stabilizer, natural emulsifier, and vegetable fat and oil were completely dispersed, ginseng powder was introduced, followed by stirring for 10 minutes, and then the resultant mass was visually inspected to identify whether the ginseng powder was completely mixed. Subsequently, the remaining raw materials were introduced and mixed for 10 minutes.

### 3.Pressurized homogenization

The liquid in which the natural stabilizer, natural emulsifier, vegetable fat and oil, and ginseng powder were mixed was subjected to homogenization under a pressure of 100 bar using a pressurized homogenizer.

### 4. Sterilization

The beverage composition in which the solution subjected to homogenization has a pH of 6.0 was sterilized at 130°C for 30 seconds.

### 5. Preparation of ginseng powder-containing beverage composition

A bottle was filled with the solution subjected to sterilization, followed by post-sterilization at 85°C for 5 minutes.

### Example 2 - Preparation of red ginseng powder-containing beverage composition

A red ginseng powder-containing beverage composition was prepared in the same manner as in Example 1, except that red ginseng powder was used instead of ginseng powder as listed in Table 1.

### [Comparative Examples 1 and 2] Preparation of ginseng powder-containing beverage composition prepared using synthetic stabilizer and synthetic emulsifier

Beverage compositions of Comparative Examples 1 and 2 were prepared using the components as listed in Table 2.

**TABLE 2**

| Raw materials (%, w/v) | | Comparative Example 1 | Comparative Example 2 |
|---|---|---|---|
| Powder | | Ginseng powder | Red ginseng powder |
| | | 2.613 | 2.613 |
| Stabilizer | Crystalline cellulose | 0.1 | 0.1 |
| | Carrageenan | - | - |
| | CMC-Na | 0.2 | 0.2 |
| | Xanthan gum | 0.1 | 0.1 |
| Emulsifier | Sucrose fatty acid ester | 0.4 | 0.4 |
| | Monoglyceride | 0.1 | 0.1 |
| | Lecithin | - | - |
| Vegetable fat and oil | | 2.0 | 2.0 |
| Fructose in liquid phase | | 8.1 | 8.1 |
| Purified water | | q.s. | q.s. |
| Total sum | | 100 | 100 |

### Comparative Example 1 - Preparation of ginseng powder-containing beverage composition prepared using synthetic stabilizer and synthetic emulsifier

A ginseng powder-containing beverage composition was prepared in the same manner as in Example 1 except that synthetic stabilizers and synthetic emulsifiers were used instead of the natural stabilizer and the natural emulsifier as listed in Table 2.

### Comparative Example 2 - Preparation of red ginseng powder-containing beverage composition prepared using synthetic stabilizer and synthetic emulsifier

A red ginseng powder-containing beverage composition was prepared in the same manner as in Comparative Example 1 except that red ginseng powder was used instead of ginseng powder.

### Experimental Example 1

### Observation of layer separation

Beverage compositions prepared in Examples and Comparative Examples were stored at room temperature (25°C) for four weeks and observed.

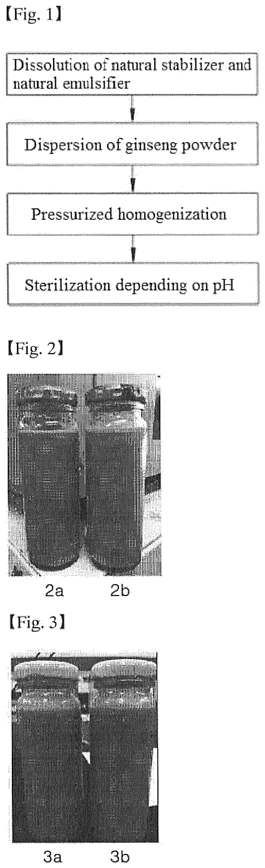

Results are shown in Figs. 2 and 3.

Fig. 2a is a photograph of a ginseng powder-containing beverage composition prepared using synthetic stabilizers and synthetic emulsifiers, showing slight generation of a white cream layer on an upper layer of the beverage through separation of fat and oil components and water due to insufficient emulsification of vegetable fat and oil.

Fig. 2b is a photograph of a ginseng powder-containing beverage composition prepared using natural stabilizers and natural emulsifiers, showing slight generation of a moisture layer on an upper layer of the beverage despite no generation of a white layer of separated fat and oil.

Fig. 3a is a photograph of a red ginseng powder-containing beverage composition prepared using synthetic stabilizers and synthetic emulsifiers and Fig. 3b is a photograph of a red ginseng powder-containing beverage composition prepared using natural stabilizers and natural emulsifiers. Fig. 3a shows slight generation of a white layer of fat and oil as in Fig. 2a, and Fig. 3b shows generation of a moisture layer on the upper layer of the beverage.

As such, although the beverage compositions of Figs. 2a, 2b, 3a and 3b showed different layer generation phenomena, respectively, it is difficult to distinguish the beverage compositions of Figs. 2a and 2b from the beverage compositions of Figs. 3a and 3b through observation with the eye. Thus, it can be seen that there is no difference between the use of the natural stabilizers and the natural emulsifiers and the use of the synthetic stabilizers and the synthetic emulsifiers.

Accordingly, as can be seen from Examples 1 and 2, it was confirmed that dispersion stability of the ginseng powder-containing beverage compositions can be secured merely using natural stabilizers and natural emulsifiers without using synthetic stabilizers and synthetic emulsifiers.

## Claims

1. A ginseng powder-containing beverage composition, comprising:
0.5% (w/v) to 5% (w/v) of ginseng powder;
0.2% (w/v) to 3% (w/v) of a natural stabilizer containing crystalline cellulose and carrageenan; and
0.01% (w/v) to 3% (w/v) of a natural emulsifier containing lecithin, based on a total volume of the beverage composition;
wherein crystalline cellulose is present in an amount of 0.1% (w/v) to 2% (w/v),
wherein carrageenan is present in an amount of 0.1% (w/v) to 1% (w/v),
wherein the natural stabilizer is free from synthetic stabilizer selected from the group consisting of CMC-Na (carboxymethyl cellulose sodium), methyl cellulose, ester gum, modified starch, carboxymethyl cellulose calcium, potassium alginate, and calcium alginate, and
wherein the natural emulsifier is free from synthetic emulsifier selected from the group consisting of glycerin fatty acid ester, sorbitan fatty acid ester, glycol fatty acid ester, and sugar ester.

2. The ginseng powder-containing beverage composition according to claim 1, wherein the natural stabilizer further comprises at least one selected from the group consisting of pectin, locust bean gum, gum arabic, alginic acid, gellan gum, karaya gum, tara gum, tamarind gum, xanthan gum, guar gum, and starch.

3. A method for preparing a ginseng powder-containing beverage composition according to claim 1 or 2, comprising:
dissolving a natural stabilizer containing crystalline cellulose and carrageenan and a natural emulsifier containing lecithin to prepare a solution,
preparing a dispersion by dispersing ginseng powder in the solution in which the natural stabilizer and the natural emulsifier are dissolved, and
subjecting the dispersion to pressurized homogenization to prepare a ginseng powder-containing beverage composition.

4. The method for preparing a ginseng powder-containing beverage composition according to claim 3, further comprising: sterilizing the beverage composition after pressurized homogenization.

5. The method for preparing a ginseng powder-containing beverage composition according to claim 4, wherein the beverage composition has a pH of 4.5 to 8.0 after the pressurized homogenization and the sterilization is performed at 130°C to 140°C for 30 seconds to 120 seconds.

6. The method for preparing a ginseng powder-containing beverage composition according to claim 4, wherein the beverage composition has a pH of 4.5 or less after the pressurized homogenization, and the sterilization is performed at 95°C to 110°C for 30 seconds to 120 seconds.

## Patentansprüche

1. Ginsengpulverhaltige Getränkezusammensetzung, umfassend:
0,5 % (Gew./Vol.) bis 5 % (Gew./Vol.) Ginsengpulver,
0,2 % (Gew./Vol.) bis 3 % (Gew./Vol.) eines natürlichen Stabilisators, der kristalline Cellulose und Carrageen enthält, und
0,01 % (Gew./Vol.) bis 3 % (Gew./Vol.) eines natürlichen Emulgators, der Lecithin enthält, basierend auf einem Gesamtvolumen der Getränkezusammensetzung,
wobei kristalline Cellulose in einem Anteil von 0,1 % (Gew./Vol.) bis 2 % (Gew./Vol.) enthalten ist,
wobei Carrageen in einem Anteil von 0,1 % (Gew./Vol.) bis 1 % (Gew./Vol.) enthalten ist,
wobei der natürliche Stabilisator frei von synthetischen Stabilisatoren ist, die aus der aus CMC-Na (Natriumcarboxymethylcellulose), Methylcellulose, Estergummi, modifizierter Stärke, Calciumcarboxymethylcellulose, Kaliumalginat und Calciumalginat bestehenden Gruppe ausgewählt sind, und
wobei der natürliche Emulgator frei von synthetischen Emulgatoren ist, die aus der aus Glycerinfettsäureester, Sorbitanfettsäureester, Glykolfettsäureester und Zuckerester bestehenden Gruppe ausgewählt sind.

2. Ginsengpulverhaltige Getränkezusammensetzung nach Anspruch 1, wobei der natürliche Stabilisator ferner wenigstens eines, das aus der aus Pektin, Johannisbrotgummi, Gummi arabicum, Algensäure, Gellangummi, Karayagummi, Taragummi, Tamarindengummi, Xanthangummi, Guargummi und Stärke bestehenden Gruppe ausgewählt ist, enthält.

3. Verfahren zur Herstellung einer ginsengpulverhaltigen Getränkezusammensetzung nach Anspruch 1 oder 2, umfassend:
Auflösen eines natürlichen Stabilisators, der kristalline Cellulose und Carrageen enthält, und eines natürlichen Emulgators, der Lecithin enthält, um eine Lösung herzustellen,
Herstellen einer Dispersion durch Dispergieren von Ginsengpulver in der Lösung, in der der natürliche Stabilisator und der natürliche Emulgator gelöst sind, und
Unterziehen der Dispersion einer Homogenisierung unter Druck, um eine ginsengpulverhaltige Getränkezusammensetzung herzustellen.

4. Verfahren zur Herstellung einer ginsengpulverhaltigen Getränkezusammensetzung nach Anspruch 3, ferner umfassend das Sterilisieren der Getränkezusammensetzung nach der Homogenisierung unter Druck.

5. Verfahren zur Herstellung einer ginsengpulverhaltigen Getränkezusammensetzung nach Anspruch 4, wobei die Getränkezusammensetzung nach der Homogenisierung unter Druck einen pH-Wert von 4,5 bis 8,0 aufweist und die Sterilisation 30 Sekunden bis 120 Sekunden lang bei 130 °C bis 140 °C durchgeführt wird.

6. Verfahren zur Herstellung einer ginsengpulverhaltigen Getränkezusammensetzung nach Anspruch 4, wobei die Getränkezusammensetzung nach der Homogenisierung unter Druck einen pH-Wert von 4,5 oder weniger aufweist und die Sterilisation 30 Sekunden bis 120 Sekunden lang bei 95 °C bis 110 °C durchgeführt wird.

## Revendications

1. Composition de boisson contenant de la poudre de ginseng, comprenant :
0,5 % (masse/volume) à 5 % (masse/volume) de poudre de ginseng ;
0,2 % (masse/volume) à 3 % (masse/volume) d'un stabilisant naturel contenant de la cellulose cristalline et du carraghénane ; et
0,01 % (masse/volume) à 3 % (masse/volume) d'un émulsionnant naturel contenant de la lécithine, rapporté à un volume total de la composition de boisson ;
dans laquelle la cellulose cristalline est présente dans une quantité de 0,1 % (masse/volume) à 2 % (masse/volume),
dans laquelle le carraghénane est présent dans une quantité de 0,1 % (masse/volume) à 1 % (masse/volume),
dans laquelle le stabilisant naturel est exempt de stabilisant synthétique choisi dans le groupe consistant en CMC-Na (carboxyméthylcellulose de sodium), méthylcellulose, gomme d'ester, amidon modifié, carboxyméthylcellulose de calcium, alginate de potassium, et alginate de calcium, et
dans laquelle l'émulsionnant naturel est exempt d'émulsionnant synthétique choisi dans le groupe consistant en ester d'acide gras de glycérine, ester d'acide gras de sorbitane, ester d'acide gras de glycol, et ester de sucre.

2. Composition de boisson contenant de la poudre de ginseng selon la revendication 1, dans laquelle le stabilisant naturel comprend de plus au moins un choisi dans le groupe consistant en pectine, gomme de caroube, gomme arabique, acide alginique, gomme de gellane, gomme de karaya, gomme de tara, gomme de tamarin, gomme xanthane, gomme guar et amidon.

3. Procédé de préparation d'une composition de boisson contenant de la poudre de ginseng selon la revendication 1 ou 2, comprenant :
la dissolution d'un stabilisant naturel contenant de la cellulose cristalline et du carraghénane et un émulsionnant naturel contenant de la lécithine pour préparer une solution,
la préparation d'une dispersion en dispersant de la poudre de ginseng dans la solution dans laquelle le stabilisant naturel et l'émulsionnant naturel sont dissous, et
la soumission de la dispersion à une homogénéisation pressurisée pour préparer une composition de boisson contenant de la poudre de ginseng.

4. Procédé de préparation d'une composition de boisson contenant de la poudre de ginseng selon la revendication 3, comprenant de plus : la stérilisation de la composition de boisson après homogénéisation pressurisée.

5. Procédé de préparation d'une composition de boisson contenant de la poudre de ginseng selon la revendication 4, dans lequel la composition de boisson présente un pH de 4,5 à 8,0 après l'homogénéisation pressurisée et la stérilisation est réalisée à de 130°C à 140°C pendant de 30 secondes à 120 secondes.

6. Procédé de préparation d'une composition de boisson contenant de la poudre de ginseng selon la revendication 4, dans lequel la composition de boisson présente un pH de 4,5 ou inférieur après l'homogénéisation pressurisée, et la stérilisation est réalisée à de 95°C à 110°C pendant de 30 secondes à 120 secondes.
